(19) Europäisches Patentamt
European Patent Office
Office européen des brevets

(11) **EP 4 465 556 B1**

(12) **EUROPEAN PATENT SPECIFICATION**

(45) Date of publication and mention
of the grant of the patent:
**04.03.2026   Bulletin 2026/10**

(21) Application number: **24176315.0**

(22) Date of filing: **16.05.2024**

(51) International Patent Classification (IPC):
*H04B 17/10* (2015.01)      *H04B 17/391* (2015.01)
*H04W 52/22* (2009.01)      *H04W 52/36* (2009.01)

(52) Cooperative Patent Classification (CPC):
**H04W 52/367; H04B 17/102; H04B 17/3913;
H04W 52/223; H04W 52/225**

(54) **RADIO EMISSION CONTROL**

FUNKEMISSIONSSTEUERUNG

COMMANDE D'ÉMISSION RADIO

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.05.2023   FI 20235554**

(43) Date of publication of application:
**20.11.2024   Bulletin 2024/47**

(73) Proprietor: **Nokia Solutions and Networks Oy
02610 Espoo (FI)**

(72) Inventors:
• **MAGGI, Lorenzo**
  **Paris (FR)**
• **FEKI, Afef**
  **Sceaux (FR)**
• **NOUMAR, Taha**
  **Colombes (FR)**
• **GRANGEAT, Christophe**
  **Viroflay (FR)**

(74) Representative: **Nokia EPO representatives
Nokia Technologies Oy
Karakaari 7
02610 Espoo (FI)**

(56) References cited:
**WO-A1-2022/241605      US-A1- 2022 159 582**

**Description**

TECHNICAL FIELD

Various example embodiments relate to wireless communication systems.

BACKGROUND

Wireless communication systems are under constant development. New applications, use cases and industry verticals are to be envisaged. This may result that radio frequency exposure increases. There exist international standards and local regulations which require to keep a time-averaged radio frequency exposure below a defined limit. There are different mechanisms to ensure that regulations are fulfilled. However, when a resource shortage occurs, devices willing to transmit may be treated differently.

WO 2022/241605 A1 discloses a scheme for power control based on measurements reported from user equipment devices and a machine learning algorithm trained at the base station by these reported measurements. The trained ML parameters are transferred to the user equipment devices for them to perform power control.

SUMMARY

The independent claims define the scope, and different embodiments are defined in dependent claims.

According to an aspect there is provided an apparatus comprising at least one processor and at least one memory storing instructions that, when executed by the at least one processor, cause the apparatus at least to: collect, per a sampling period, historical data on amount of radiated power for transmission of data elements during the sampling period; and transmit collected historical data to a network entity.

In embodiments, the at least one processor and the at least one memory storing instructions, when executed by the at least one processor, further cause the apparatus at least to: determine a maximum radiated power consumption allowed over a next sampling period based on a control policy having parameters whose values are weight values; receive from the network entity updated weight values for the control policy; and update the weight values in the control policy to be the updated weight values.

In embodiments, the at least one processor and the at least one memory storing instructions, when executed by the at least one processor, further cause the apparatus at least apply a legacy control policy until the control policy is received from the network entity, wherein the control policy is a machine learning based trained control policy.

In embodiments, the at least one processor and the at least one memory storing instructions, when executed by the at least one processor, further cause the apparatus at least to transmit the historical data periodically.

According to an aspect there is provided an apparatus comprising at least one processor and at least one memory storing instructions that, when executed by the at least one processor, cause the apparatus at least to: receive, from at least one second apparatus, historical data collected during at least one sampling period, the historical data including, per a sampling period, amount of radiated power for transmission of data elements during the sampling period; determine, using the historical data collected, per a sampling period, a hindsight based estimation for a maximum radiated power consumption that should have been allowed over a next sampling period; determine, using at least amounts of radiated power in the historical data received and corresponding hindsight based estimations determined, updated weight values for a control policy; and transmit the updated weight values to the second apparatus.

In embodiments, the at least one processor and the at least one memory storing instructions, when executed by the at least one processor, further cause the apparatus at least to determine the hindsight based estimations by optimizing a fairness between at least a maximum number of served resource requests and a minimum number of served resource request.

In embodiments, the at least one processor and the at least one memory storing instructions, when executed by the at least one processor, further cause the apparatus at least to determine the weight values for the control policy by a training a machine learning based model, using at least the amounts of radiated power as inputs and the corresponding hindsight based estimations as target outputs.

In embodiments, the at least one processor and the at least one memory storing instructions, when executed by the at least one processor, further cause the apparatus at least to determine the updated weight values by minimizing a loss function between the inputs and the target outputs.

In embodiments, the at least one processor and the at least one memory storing instructions, when executed by the at least one processor, further cause the apparatus at least to, when historical data is first time received from a second apparatus: determine weight values instead of updated weight values; and transmit the control policy and weight values to the second apparatus.

In embodiments, the amount of radiated power for transmission of data elements in the historical data is provided by means of at least number of tokens requested during the sampling period, wherein a token is indicative of an amount of radiated power for transmission of a data element.

In embodiments, the number of tokens requested during the sampling period in the historical data comprises at least a number of tokens requested during the sampling period across all the at least one second apparatus or a number of tokens served during the sampling period across all the at least one second apparatus.

In embodiments, the historical data further comprises at least one of a number of tokens requested during the sampling period per a second apparatus or a number of tokens served during the sampling period per a second apparatus.

According to an aspect there is provided a method comprising: collecting, per a sampling period, historical data on amount of radiated power for transmission of data elements during the sampling period; and transmitting collected historical data to a network entity.

According to an aspect there is provided a method comprising: receiving, from at least one apparatus, historical data collected during at least one sampling period, the historical data including, per a sampling period, amount of radiated power for transmission of data elements during the sampling period; determining, using the historical data collected, per a sampling period, a hindsight based estimation for a maximum radiated power consumption that should have been allowed over a next sampling period; determining, using at least amounts of radiated power in the historical data received and corresponding hindsight based estimations determined, updated weight values for a control policy; and transmitting the updated weight values to the apparatus.

According to an aspect there is provided a computer readable medium comprising instructions stored thereon for performing at least one of a first process or a second process, wherein the first process comprises at least the following: collecting, per a sampling period, historical data on amount of radiated power for transmission of data elements during the sampling period; and transmitting collected historical data to a network entity, wherein the second process comprises at least the following: receiving, from at least one apparatus, historical data collected during at least one sampling period, the historical data including, per a sampling period, amount of radiated power for transmission of data elements during the sampling period; determining, using the historical data collected, per a sampling period, a hindsight based estimation for a maximum radiated power consumption that should have been allowed over a next sampling period; determining, using at least amounts of radiated power in the historical data received and corresponding hindsight based estimations determined, updated weight values for a control policy; and transmitting the updated weight values to the apparatus.

In an embodiment, the computer readable medium is a non-transitory computer readable medium.

According to an aspect there is provided a computer program comprising instructions which, when executed by an apparatus, cause the apparatus to perform at least one of a first process or a second process, wherein the first process comprises at least the following: at least the following: collecting, per a sampling period, historical data on amount of radiated power for transmission of data elements during the sampling period; and transmitting collected historical data to a network entity, wherein the second process comprises at least the following: receiving, from at least one apparatus, historical data collected during at least one sampling period, the historical data including, per a sampling period, amount of radiated power for transmission of data elements during the sampling period; determining, using the historical data collected, per a sampling period, a hindsight based estimation for a maximum radiated power consumption that should have been allowed over a next sampling period; determining, using at least amounts of radiated power in the historical data received and corresponding hindsight based estimations determined, updated weight values for a control policy; and transmitting the updated weight values to the apparatus.

BRIEF DESCRIPTION OF DRAWINGS

Embodiments are described below, by way of example only, with reference to the accompanying drawings, in which

Fig. 1a illustrates an exemplified high-level network architecture;
Fig. 1b illustrates an exemplified high-level open radio access network architecture;
Fig. 1c illustrates an exemplified high-level open radio access network logical architecture;
Fig. 2 illustrates an example functionality;
Fig. 3 illustrates an example functionality;
Fig. 4 illustrates an example functionality;
Fig. 5 illustrates an example functionality;
Fig. 6 illustrates simulation results;
Fig. 7 is a schematic block diagram;
Fig. 8 is a schematic block diagram;
Fig. 9 is a schematic block diagram; and
Fig. 10 is a schematic block diagram.

DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, a first apparatus could be termed a second apparatus, and similarly, a second apparatus could be also termed a first apparatus without departing from the scope of the present disclosure.

5G (fifth generation), 5G-Advanced, and beyond future wireless networks, aim to support a large variety of services, use cases and industrial verticals, for example unmanned mobility with fully autonomous connected vehicles, other vehicle-to-everything (V2X) services, or smart environment, e.g. smart industry, smart power grid, or smart city, just to name few examples. To provide variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification, short-packet communication, and blockchain technologies. For example, in the network slicing multiple independent and dedicated network slice instances may be created within the same infrastructure to run services that have different requirements on latency, reliability, throughput and mobility.

It is envisaged that key features of 6G (sixth generation) will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

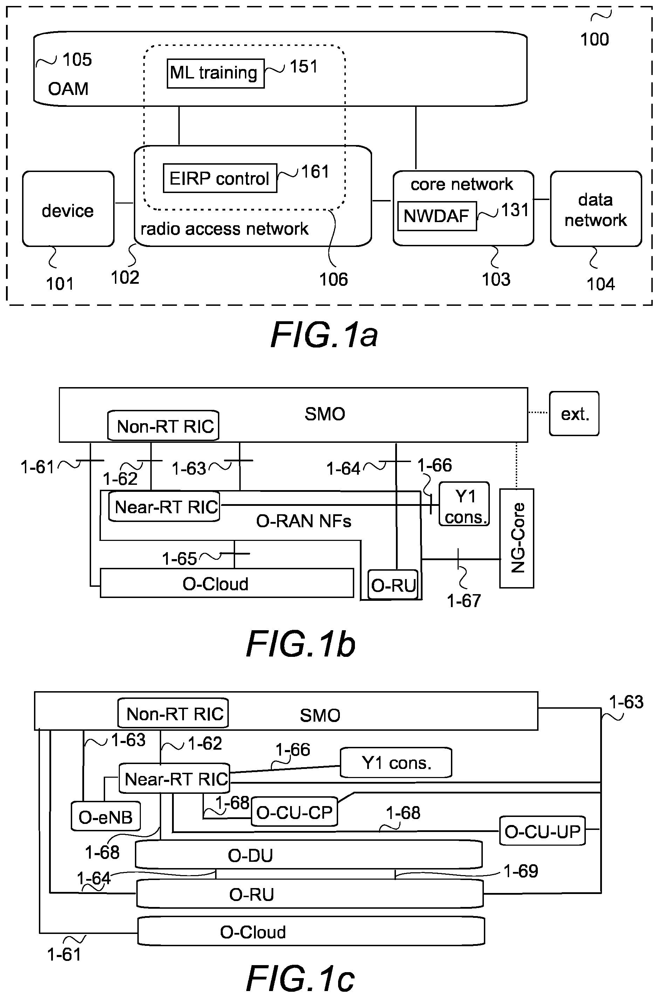

Fig. 1a illustrates an exemplified high-level cloud-native data-driven service-based network architecture only showing some functional entities, all being logical units, whose implementation may differ from what is shown. The connections shown in Fig. 1 are logical connections; the actual physical connections may be different.

The system 100 depicted in Fig. 1a is based on the 5G system (fifth generation system). The examples are described herein using principles and terminology of 5G without limiting the examples, and the terminology used to the 5G. Further, EIRP (equivalent isotropic radiated power) is used as a non-limiting example of a quantity used in controlling radio emissions. A person skilled in the art may apply the solutions and examples to other quantities or metrics relating to radio emission, for example effective monopole radiated power, and/or other communication systems, for example beyond 5G, provided with necessary properties. Further, is should be appreciated that only some operational entities and components, with a non-limiting example of their mapping, are disclosed.

The 5G system 100 is envisaged to use network functions virtualization, network slicing, network sharing, edge computing and software defined network, aiming to data driven network. The network functions virtualization allows network functions to be virtualized in a cloud environment. In the non-limiting example of Fig. 1a, the 5G system 100 is based on standalone access networks and a standalone core network via which networks services, for example, can be delivered between devices and data networks, for example the Internet. A device may be any electrical device connectable wirelessly to a radio access network. The device may be a user equipment, a vehicle, an internet of things device, an industrial internet of things device, on-person device, like wearable device, just to mention few non-limiting examples. A radio access network may be any kind of an access network, such as a cellular access network, for example 5G-Advanced network, a non-terrestrial network, a legacy cellular radio access network, or a non-cellular access network, for example a wireless local area network. To provide the wireless access, the radio access network comprises access devices which may provide one or more cells. There are a wide variety of access devices, or radio access network nodes, or radio access points, including different types of base stations, such as eNB, gNB, split gNB, transmission-reception points, network-controlled repeaters, donor nodes in integrated access and backhaul (IAB), fixed IAB nodes, mobile IAB nodes mounted on vehicles, for example, and satellites.

Referring to Fig. 1a, disaggregated, virtualized and software-based components comprise device components 101 for device functionalities in device domain, access network components 102 for access network functionalities in access network domain, a core network component 103 for core network functionalities in core network domain, data network components 104 for data network functionalities in data network domain, and an operations, administration and management (OAM) components 105 in OAM domain for component/domain management, operation support system functionalities and orchestration on various levels. Components (elements, functional units) of service based architecture are defined using network functions that may be cloudified network functions. A network function supports or hosts a collection of services and offers one or more services to other network functions in the network. The network functions may be deployed as microservices. A service consumer, or shortly a consumer, is a network function requesting, or subscribing, a service from another network function, which is a service producer, or shortly a producer, that provides the service as a reply (response) or a notification.

The system 100 may comprise an open radio access network (open RAN, O-RAN) platform 106. The purpose of the open radio access platform 106 is to interact and guide the behavior of the radio access network, for example radio access network nodes in a radio access network 102. The open radio access network platform 106 may be implemented based on architecture defined by the O-RAN ALLIANCE and illustrated by means of Fig. 1b and Fig. 1c. Fig. 1b illustrates an exemplified high-level open radio access network architecture and Fig. 1c illustrates an exemplified high-level open radio access network logical architecture.

Referring to Fig. 1b, the open radio access platform may comprise network functions for radio access, a service management and orchestration framework (SMO) part to manage the network functions and an O-Cloud (O-RAN Cloud) to host cloudified network functions. The open radio access platform may be called xRAN controller or a radio intelligent controller (RIC), and it may comprise a non-real-time part (non-RT RIC) and a near-real-time part (near-RT RIC). The non-real-time part may be part of the service management and orchestration framework, and the near-real-time part may be on a radio access side. The radio access side comprises the radio access network nodes that are configured to implement. The purpose of both parts of RIC is to optimize the RAN performance, for example by using machine learning agents running in the RIC, either in one of the parts or in both parts. The O-Cloud is a cloud computing platform comprising a collection of physical infrastructure nodes that meet O-RAN requirements to host the relevant O-RAN functions, or O-RAN network functions (NFs), such as Near-RT RIC, open radio unit (O-RU), etc., supporting software components (such as Operating System, Virtual Machine Monitor, Container Runtime, etc.) and the appropriate management and orchestration functions. Further, different algorithms, for example optimization algorithms, and services can be instantiated as applications on top of the underlying radio intelligent controller (the open platform). The applications, that can be called "xApps", can interact with the radio intelligent controller by means of one or more application programming interfaces that may be called "API X" and that can be freely defined. An interface 1-61 between the SMO and the O-Cloud is an O2 interface. An interface 1-62 between the non-real-time part and the near-real-time part is A1 interface. An interface 1-63 between the SMO and O-RAN network functions is an O1, and the interface 1-64 between the SMO and O-RU is an Open Fronthaul M-Plane. In other words, the interfaces 1-61, 1-62, 1-63 and 1-64 connect the SMO framework to O-RAN network functions and the O-Cloud. An interface 1-65 between the O-Cloud and the O-RAN network functions is an O-Cloud Notification. An interface 1-66 between the near-real-time part and Y1 consumers (Y1 cons.) is Y1. An interface 1-67 between the O-RAN network functions and the NG-Core (next generation core) is an NG interface. The dotted interfaces between the NG-Core and the SMO and the SMO and an external (ext.) system providing enrichment data to the SMO are interfaces out of scope for O-RAN.

Referring to Fig. 1c, a non-limiting example of logical components in O-RAN and O-RAN defined interfaces are illustrated. In the example of Fig. 1c, a base station functionality may be provided by an O-eNB (evolved Node B), or by a split gNB comprising O-DU (distributed unit), O-RU and a centralized unit further split into a control plane component O-CU-CP, and to a user plane component O-CU-UP. The logical split allows different functionalities to be deployed at different locations of the network, as well as on different hardware platforms. For example, O-CUs and O-DUs can be virtualized on white box servers at the edge (with hardware acceleration for some of the physical layer functionalities), while the O-RUs can be generally implemented on Field Programmable Gate Arrays (FPGAs) and Application-specific Integrated Circuits (ASICs) boards and deployed close to antennas. As shown in Fig. 1c, the O-RU terminates the Open Fronthaul M-Plane interface1-64 towards the O-DU and the SMO. In addition to interfaces shown also in Fig. 1b, O-RAN defined interfaces include an interface 1-68 between the near-real-time part and the radio access network nodes is an E2 interface. In O-RAN context, logical nodes (logical network nodes) terminating the E2 interface 1-68 may be called E2 nodes. Further, there is illustrated an open fronthaul CUS-plane interface 1-69 between the O-RU and the O-DU. Although not shown in Fig. 1c, the O-eNB may support O-DU and O-RU functions with an Open Fronthaul interface between them.

Returning to the non-limiting example of Fig. 1a, Depending on an implementation, training of a control policy may be implemented using the RIC 106, or by using 5G core network 103. When the RIC is used, there may be a machine learning (ML) training function 151 in the non-real-time part, and an xApp, for example an EIRP (equivalent isotropic radiated power) control application function161 may be defined to the real-time part to apply control policy, as will be described in more detail below. The machine learning training function 151 can be deployed at different levels, including at different domain levels (for example, RAN or core network) and at end-to-end level. The machine learning training function 151 may also be disaggregated to a training consumer, e.g. analytics function(s), and a training producer, e.g. machine learning training function.

It is envisaged that training machine learning based models, for example for data analytics, may also be performed in the 5G core network 103 by a network data analytics function (NWDAF) 131. The NWDAF 131 may be disaggregated into two separate logical entities: model training logical function, to train models, and analytics logical function to produce analytic reports using models trained by the model training logical function. The model training logical function may be in a central NWDAF whereas analytics logical functions may be in distributed edge NWDAFs, co-located with edge network functions. In the implementation, in which the training of the control policy is implemented using 5G core network (i.e. no RIC function 151), the NWDAF 131 may be configured to perform the training. The implementation may include one or more analytics logical functions, for example EIRP control verification and update functions, not illustrated in Fig. 1a.

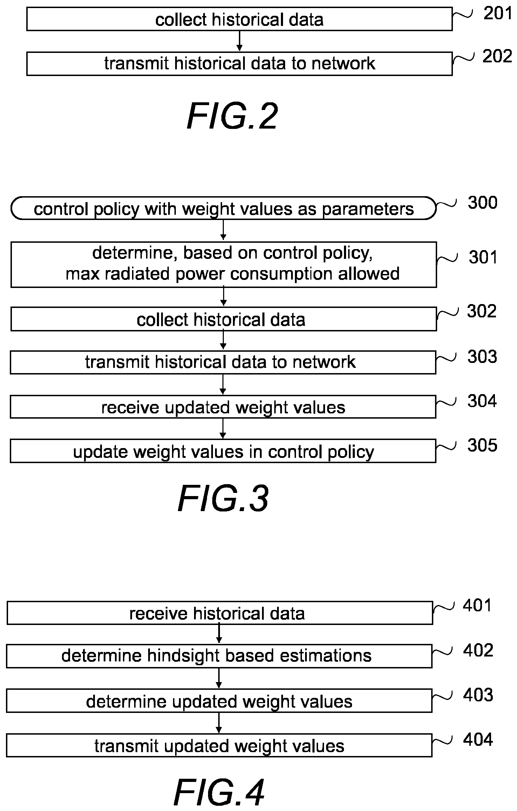

The separate training and retraining as a background process (offline), regardless whether it is performed by the ML training function 151 in the RIC, for example in the non-RT RIC part, or by the NWDAF 131, and applying a control policy for radiated power (e.g. for EIRP) in real time, as will be described below with Fig. 2 to Fig. 5, ensure that radio emissions are not exceeding the configured thresholds while the training evaluates in hindsight the performance of the control policy and builds an optimized control policy that smoothens the resource allocation and reduces resource shortage, for example physical resource block (PRB) shortage via machine learning, for example via imitation learning.

In the example below it is assumed that the control policy is based on an adjusted greedy policy mechanism. A greedy policy computes remaining allowed amount of radiated power (budget) and can potentially use it up at any sampling period. The greedy policy mechanism is adjusted by pre-emptively reduce the consumption of remaining allowed amount of radiated power at some time to avoid resource shortage in the future. In other words, the adjusted greedy policy mechanism not letting to use up all remaining allowed amount of radiated power per a sampling period, which may be 100ms up to 1s long. An example of a greedy policy mechanism is a token bucket mechanims. A token is indicative of an amount of radiated power for transmission of a data element. For example, the token may be a power emitted per an OFDM (orthogonal frequency-division multiplexing) symbol in a direction of maximum beam gain. The token bucket mechanism keeps track of the maximum token consumption allowed to be consumed over the next sampling period without exceeding radio exposure limit(s). When an outer loop determines, based on a control policy, a token bucket for a sampling period, an inner loop may convert the token bucket into a maximum number of subcarriers, for example, on which devices can be scheduled at any transmission-time-interval within the sampling period.

Fig. 2 and Fig. 3 illustrate different examples of functionalities of an apparatus (RAN apparatus), for example gNB or other access device in the radio access network node, that the apparatus may be configured to perform while resources are allocated to second apparatuses, e.g. devices, or at least to one second apparatus, for data transmissions or receptions.

Referring to Fig. 2, the apparatus collects (block 201), per a sampling period, historical data on amount of radiated power for transmission of data elements during the sampling period. The amount of radiated power for transmission of data elements in the historical data may be provided by means of at least number of tokens requested during the sampling period. Depending on an implementation the number of tokens requested during the sampling period in the historical data may comprise at least a number of tokens requested during the sampling period across all the at least one second apparatus (all second apparatuses) and/or a number of tokens served during the sampling period across all the at least one second apparatus (all second apparatuses). The historical data may further comprise at least one of a number of tokens requested during the sampling period per a second apparatus or a number of tokens served during the sampling period per a second apparatus. Naturally any other metrics than tokens can be used to indicate the amount of radiated power. The historical data may be collected at consecutive sampling periods.

The apparatus transmits (block 202) collected historical data to a network entity. For example, the historical data may be transmitted to the RIC, for example to non-RT RIC part, e.g. to the ML training function, or to the NWDAF. The apparatus may transmit the historical data periodically, for example after every $N^{th}$ sampling period, wherein N is a positive integer (1, 2, 3 etc.) However, it should be appreciated that the apparatus may transmit the historical data as it is collected.

In the example of Fig. 3 it is assumed that the apparatus comprises (block 300) a control policy having parameters whose values are weight values.

Referring to Fig. 3, the apparatus determines (block 301) a maximum radiated power consumption allowed (for example a maximum toke consumption allowed or a token bucket) over a next sampling period based on the control policy with current weight values. Then the apparatus collects (block 302), (as described above with block 201), per a sampling period, historical data, and transmits (block 303), (as described above with block 202), historical data collected to a network entity.

When the apparatus receives (block 304) from the wireless network updated weight values for the control policy, the apparatus updates (block 305) the weight values in the control policy to be the updated weight values. Then, in the example of Fig. 3, the apparatus uses the updated control policy in block 301.

In other words, the blocks 301 and 302 may be performed continuously and block 303 periodically, using in block 301 the control policy with the latest received weight values.

Fig. 4 illustrates an example of a functionality of an apparatus (a network apparatus, e.g. the network entity) performing the training of the control policy in the network side. The apparatus may be a network node, or network entity, e.g. comprised in the non-RT-RIC part for machine learning training, or an apparatus implementing the NWDAF. In the example of Fig. 4 it is assumed that the apparatus, and a second apparatus (a RAN apparatus), wherefrom historical data is received, both apply the same control policy. For example, they may have the same neural network structure for the control policy. It should be appreciated that the below process may be performed for a single second apparatus, or for a group of second apparatuses.

Referring to Figure 4, the apparatus receives (block 401), from at least one second apparatus, historical data collected during at least one sampling period. The historical data includes, per a sampling period, amount of radiated power for transmission of data elements during the sampling period. Examples of the historical data are given above with block 201.

The apparatus then determines (block 402), using the historical data collected, per a sampling period, a hindsight based estimation for a maximum radiated power consumption that should have been allowed over a next sampling period. (The hindsight based estimation may be a number or a value.) The apparatus may determine the hindsight based estimations by optimizing a fairness between at least a maximum number of served resource request and a minimum number of served resource request. In other words, the apparatus may compute in block 402 an actual control policy providing optimal actual EIRP reductions, or correspond other radiated power reductions, that would have guaranteed the highest possible performance, e.g. EIRP performance, in hindsight, in terms of a trade-off between minimum resource shortage, e.g. minimum PRB shortage, and maximum number of served resource request for data element transmissions. This may be called on oracle outer-loop control policy. The historical data may be processed as follows, using, for a sake of clarity, tokens and EIRP as non-limiting examples: at sampling period $t$ the oracle policy provides for "state" $s_t$, which is the historical data collected at the sampling period $t$ a corresponding optimal "action" $a_t^*$, which is a maximum number of tokens allowed to be served over the next sampling period, and forms $s_t$, $a_t^*$ pairs.

In an implementation, it is assumed that the number of requested tokens does not depend on past EIRP control decisions. In other words, it is assumed that resources requested, e.g. OFDM symbols requested to be transmitted, but not served at a sampling period simply disappear at the next period. In the implementation, determining hindsight based estimations in block 402 may be based on following, using physical resource blocks, PRB, as a non-limiting example of resources, and tokens and EIPR also as non-limiting examples: Let $x_t \in [0,1]$ be a reduction factor applied at sampling period $t$. Then, given the assumption above, $c_t = x_t y_t$ would have been the number of served tokens at time $t$.

Therefore, the actual EIRP constraint (average token consumption over a sliding window of W samples) can be written as:

$$\frac{1}{W} \sum_{i=t}^{t+W-1} x_i y_i \leq \bar{M}, \qquad \forall t = 1,2,\dots$$

wherein $\bar{M}$ is a predefined threshold which average token consumption over a sliding window of W samples is not allowed to exceed.

To reduce PRB shortage the target is to maximize the $\alpha$-fairness of the consumptions $\{c_t\}_t$, i.e.,

$$\max_x \sum_{t>0} f^{(\alpha)}(x_t y_t)$$

where

$$f^{(\alpha)}(z) = \begin{cases} \frac{z^{1-\alpha}}{1-\alpha}, & \alpha \geq 0, \alpha \neq 1 \\ \log z, & \alpha = 1 \end{cases}$$

is the so-called $\alpha$-fairness function that guarantees fairness across allocations z.

If $\alpha = 0$, then the sum of served tokens is maximized, but no fairness is ensured. If $\alpha \to \infty$, then the solution tends to the max-min one: the minimum number of served tokens across all sampling periods is maximized. In this case, PRB shortage is minimized (a posteriori). $\alpha = 1$ corresponds to the classic proportional fairness, which will be selected for this implementation.

The final optimization problem then is:

$$x^* = \operatorname*{argmax}_x \sum_{t>0} f^{(\alpha)}(x_t y_t)$$

$$\text{s. t.} \quad \frac{1}{W} \sum_{i=t}^{t+W-1} x_i y_i \leq \bar{M}, \qquad \forall t = 1,2,\dots$$

$$x_t \in [0,1], \qquad \forall t = 1,2,\dots$$

Then, the optimal EIRP reduction action (the hindsight based estimation) $a_t^*$ at sampling period $t$ is computed as $a_t^* = x_t^* y_t$. The optimization problem above is convex, with linear constraints. It can be solved via standard open-source software, for example such as CVXPY. (CVXPY is a Python-embedded modeling language for convex optimization problems.)

In the implementation, resource shortage (PRB shortage) is avoided by pre-emptively limiting the number of served tokens before resource starvation.

In another implementation, it is assumed that the number of requested tokens depends on past actual EIRP control decisions. In other words, it is assumed that resources requested, e.g. OFDM symbols requested to be transmitted, but not served at a sampling period reappear and request to be served at the next sampling period. In the implementation, determining hindsight based estimations in block 402 may be based on following, using physical resource blocks, PRB, as a non-limiting example of resources, and tokens and EIRP also as non-limiting examples:

Assuming that $r_t$, i.e. the total number of requests at time $t$, behave as a queue, when $c_t$ tokens are served, $y_{t+1}$ are requested at the next sampling period, the total number of request at time $t+1$, i.e. $r_{t+1}$ can be expressed as follows:

$$r_{t+1} = r_t + y_{t+1} - c_t, \quad \forall t > 1$$

$$r_1 = y_1$$

wherein the consumption $c_t = x_t r_t$. The overall optimization problem can then be expressed:

$$x^* = \underset{x}{\text{argmax}} \sum_{t>0} f^{(\alpha)}(x_t r_t)$$

s. t.

$$\frac{1}{W} \sum_{i=t}^{t+W-1} x_i r_i \leq \bar{M}, \quad \forall t \geq 1$$

$$r_{t+1} = (1 - x_t)r_t + y_{t+1}, \quad \forall t > 1$$

$$r_1 = y_1$$

$$x_t r_t \leq K$$

$$x_t \in [0,1], \quad \forall t = 1,2, \dots$$

wherein K is the maximum number of tokens that can be used (spent) during one sampling period. This problem is non-linear but it can be converted into a mixed integer convex programming (MICP) as follows.

Rewriting $c_t = x_t r_t$ as $c_t = min(\beta_t K, r_t)$ where $\beta_t \in$ [0; 1]. Then, $min(\beta_t K, r_t)$ may be rewritten as follows:

$$\beta_t K - r_t \leq z_t A$$

$$r_t - \beta_t K \leq (1 - z_t)A$$

$$c_t \leq \beta_t K$$

$$c_t \leq r_t$$

$$c_t \geq \beta_t K - A z_t$$

$$c_t \geq r_t - A(1 - z_t)$$

$$z_t \in \{0,1\}$$

wherein $A$ is big enough integer. For example, $A$ can be set to the maximum possible number of tokens that can be requested at any sampling period.

Therefore, the MICP formulation may be expressed as follows:

$$c^*, z^*, \beta^* = \underset{c,z,\beta}{\text{argmax}} \sum_{t>0} f^{(\alpha)}(c_t)$$

s. t.

$$\frac{1}{W} \sum_{i=t}^{t+W-1} c_i \leq \bar{M}, \quad \forall t \geq 1$$

$$r_{t+1} = r_t - c_t + y_{t+1}, \quad \forall t > 1$$

$$r_1 = y_1$$

$$\beta_t K - r_t \leq z_t A$$

$$r_t - \beta_t K \leq (1 - z_t)A$$

$$c_t \leq \beta_t K$$

$$c_t \leq r_t$$

$$c_t \geq \beta_t K - A z_t$$

$$c_t \geq r_t - A(1 - z_t)$$

$$z_t \in \{0,1\}$$

$$x_t \in [0,1], \quad \forall t = 1,2, \dots$$

Finally, the optimal EIRP reduction action (the hindsight based estimation) $a_t^*$ at sampling period $t$ is set to $a_t^* = \beta_t^* K$.

Also in the implementation, resource shortage (PRB shortage) is avoided by pre-emptively limiting the number of served tokens before resource starvation.

Then the apparatus determines (block 403), using at least amount of radiated power, e.g numbers of tokens requested, in the historical data received, e.g. *st*, and corresponding hindsight based estimations, e.g.

$a_t^*$, determined, updated weight values for a control policy. The weight values for the control policy may be determined in block 403 by training a machine learning based model, using amounts of radiated power as inputs and the corresponding hindsight based estimations as target outputs. For example, the updated weight values may be determined by minimizing a loss function between the inputs and the target outputs. The machine learning may be based on imitation learning.

Following example uses the pairs (*st*, $a_t^*$) determined, for example, by one of the above implementations, and trains a neural network (NN) via supervised learning, where inputs are states and outputs are optimal actions.

Let $\theta$ be the weights of the NN and let $\pi_\theta(.)$ be the NN function ap-proximator function depicting the control policy.

In an implementation, the apparatus may determine in block 403 optimal weight values $\theta^*$ that minimize the loss:

$$\theta^* = \min_\theta \sum_t (\pi_\theta(s_t) - a_t^*)^2$$

In other words, the policy $\pi_\theta$ given above imitates at best the hindsight, or oracle policy. i.e., for all the states $s_t$ seen in the past, the target is that

$\pi_{\theta^*}(s_t) \approx a_t^*$.

When the optimal wight values, i.e. updated weight values (weight values that may be different than in a previous round the optimal weight values were determined), have been determined in block 403, the apparatus transmits (block 404), the updated weight values to the second apparatus.

Since the apparatus and the second apparatus have same neural network structure, receiving the updated weight values $\theta^*$ only is sufficient for the second apparatus to reproduce the exact input/output behavior of $\pi_{\theta^*}(.)$.

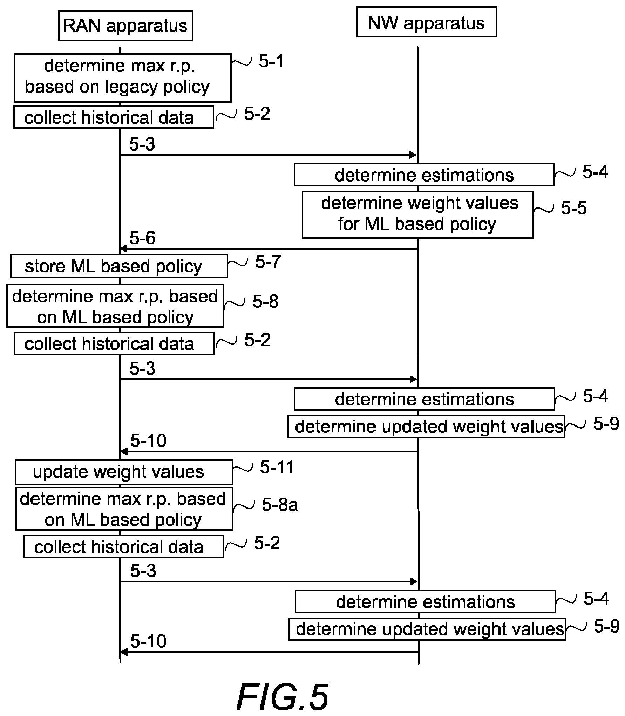

Fig. 5 illustrates a further example functionalities. In the example of Fig. 5 it is assumed, that the apparatuses, i.e. a radio access network, RAN, apparatus and a network, NW, apparatus, do not at the beginning have the same neural network structure, and the RAN apparatus is configured to implement a legacy control policy, or a baseline control policy, that is not based on trained machine learning model. For example, an outer loop control policy to obtain the maximum radiated power consumption allowed (max r.p. ), may be used. For example, the RAN apparatus may determine a token bucket $b_t$ using preceding token bucket and token consumption $c$, e.g. tokens received, at different times, for example using in block 5-1 following equation:

$$b_t = b_{t-1} - c_{t-1} + c_{t-W}, \qquad \forall\, t \geq W$$

The above equation allows a scheduler to use the whole bucket of tokens available. This may cause that no resources are allowed to be scheduled for a certain number of sampling periods for example for devices with non-guaranteed bit rate, or for devices willing to transmit during the certain number of sampling periods, while devices scheduled earlier will experience no additional delay.

Referring to Fig. 5, the RAN apparatus applies the legacy control policy and determines in block 5-1 a maximum token consumption allowed over a next sampling period based on the legacy control policy. The RAN apparatus further collects in block 5-2, per a sampling period, historical data on an amount of radiated power for transmission of data elements, for example as described above with block 201. Blocks may be performed a plurality of times, and also simultaneously. Then the RAN apparatus transmits (message 5-3) the historical data collected to the NW apparatus, for example as described above with block 202. The RAN apparatus also continues performing blocks 5-1 and 5-2.

In the illustrated example, when historical data is first time received from the RAN apparatus, or enough historical data for training is received from the RAN apparatus, the NW apparatus determines in block 5-4 hindsight based estimations, as described above with block 402, and then trains a control policy by determining in block 5-5 weight values for the control policy, in a similar manner as described above with block 402 to determine updated weight values. The only difference is that the weight values are now determined for the first time. Then, in the illustrated example, the NW apparatus transmits (message 5-6) to the RAN apparatus the control policy, i.e. a neural network, NN structure, for machine learned, ML, based control policy, and the weight values. It should be appreciated that in another example, an indication of the NN structure for the ML based control policy may be transmitted, or if the RAN apparatus and the NW apparatus both have the same NN structure for the ML based control policy, only weight values are transmitted in message 5-6.

The RAN apparatus has continued performing blocks 5-1 and 5-2 until message 5-6 is received. In other words, the NW apparatus may determine the weight values while legacy policy is applied, and no online exploration is needed in the training phase where the weight values are determined.

In the illustrated example, the RAN apparatus stores in block 5-7 the ML based control policy received, with its weight values, and starts to apply in block 5-8 the ML based control policy received. Block 5-7 may comprise, when the RAN apparatus already has the NN structure for the ML based control policy, storing the weight values, so that the ML based control policy can be applied in block 5-8. In other words, the RAN apparatus determines in block 5-8 a maximum radiated power consumption allowed over a next sampling period based on the ML based control policy. The RAN apparatus further continues collecting in block 5-2, per a sampling period, historical data, for example as described above with block 201. Blocks 5-8 and 5-2 may be performed a plurality of times, and also simultaneously. Then the RAN apparatus transmits (message 5-3) the historical data collected to the NW apparatus, for example as described above with block 202. The RAN apparatus also continues performing blocks 5-8 and 5-2.

For example, the RAN apparatus may perform during block 5-8 the following:

i. at each sampling period $t$, observe $s_t$ and determine (compute) $a_t^* = \pi_{\theta^*}(s_t)$ by using the control policy

ii. determine, using the legacy control policy, maximum radiated power consumption allowed, for example by determining token bucket $b_t$ as in block 5-1

iii. Select the smallest one of values determined in points i. and ii., and determined that to be the maximum radiated power consumption allowed over a next sampling period. For example, a maximum number of tokens $d_t = \min(a_t^*, b_t)$ is allocated to the next sampling period.

It should be appreciated that the above is a mere example, and any known or future ways may be used.

Then the maximum radiated power consumption allowed, e.g. the maximum number of tokens $d_t$ is fed, to an inner loop, which may convert the the maximum radiated power consumption allowed (e.g. the token bucket) into a maximum number of subcarriers, for example, on which devices can be scheduled at any transmission-time-interval within the sampling period. In other words, the inner loop does not notice the way the token bucket, i.e. the maximum radiated power consumption allowed, is determined.

As can be seen, the RAN apparatus only needs to perform one neural network inference to compute $\pi_{\theta^*}(s_t)$ at each sampling period (e.g., every 100ms).

When the NW apparatus receives the historical data (message 5-3), the NW apparatus determines in block 5-4 hindsight based estimations, as described above with block 402, and then trains the control policy by determining in block 5-9 updated weight values for the control policy, as described above with block 402. Then the NW apparatus transmits (message 5-10) the updated weight values to the RAN apparatus.

The RAN apparatus has continued performing blocks 5-8 and 5-2 until message 5-10 is received. In the illustrated example, the RAN apparatus updates in block 5-11 the weight values in the ML based control policy according to updated weight values received, and starts to apply in block 5-8a the ML based control policy with the updated weight values. The only difference between blocks 5-8 and 5-8a is that the weight values used may be different. In other words, the RAN apparatus determines in block 5-8a a maximum radiated power consumption allowed over a next sampling period based on the ML based control policy. The RAN apparatus further continues collecting in block 5-2, per a sampling period, historical data, for example as described above with block 201.

Then the RAN apparatus transmits (message 5-3) the historical data collected to the NW apparatus, for example as described above with block 202. The RAN apparatus also continues performing blocks 5-8a and 5-2.

When the NW apparatus receives the historical data (message 5-3), the NW apparatus determines in block 5-4 hindsight based estimations, as described above with block 402, and then trains the control policy by determining in block 5-9 updated weight values for the control policy, as described above with block 402. Then the NW apparatus transmits (message 5-10) the updated weight values to the RAN apparatus. The process returns to block 5-11, and repeats the blocks.

As can be seen from the example, the NW apparatus may perform blocks 5-4, 5-5, 5-9 while the RAN apparatus determines the maximum token consumption allowed over a next sampling period. Further, blocks 5-4 and 5-9 may be repeated on a slow time scale of few hours, while block 5-8a is repeated per a sampling period, i.e. in a time scale of 100 milliseconds to 1 second, for example.

Further, the performance of the RAN apparatus, or the services provided by the RAN apparatus are not degraded when the NW apparatus determines the (updated) weight values, i.e. performs the training.

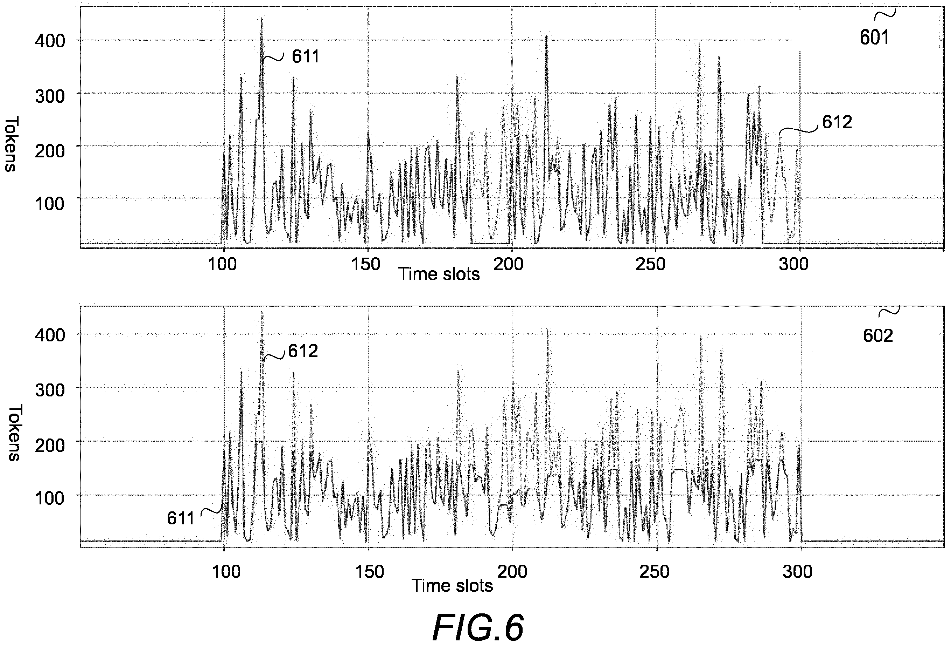

Figure 6 illustrates simulations results of two different scenarios. The scenario 601 simulates the above described legacy control policy (baseline control policy) and the scenario 602 simulates the control policy whose weight values are updated as discussed above. Solid lines 611 represent served traffic (data elements transmitted) and dashed lines 612 represent incoming traffic (data elements to be transmitted). The simulation results show, when comparing the two scenarios 601, 602 that in the scenario 602 resource shortage is avoided by pre-emptively limiting the number of served tokens before resource starvation.

The blocks and related functions described above by means of Fig. 1a to Fig. 5 are in no absolute chronological order, and some of them may be performed simultaneously or in an order differing from the given one. Other functions can also be executed between them or within them, and other information may be transmitted, and/or other rules applied. Some of the blocks or part of the blocks or one or more pieces of information can also be left out or replaced by a corresponding block or part of the block or one or more pieces of information. Furthermore, some of the blocks in one example may be combined with another example.

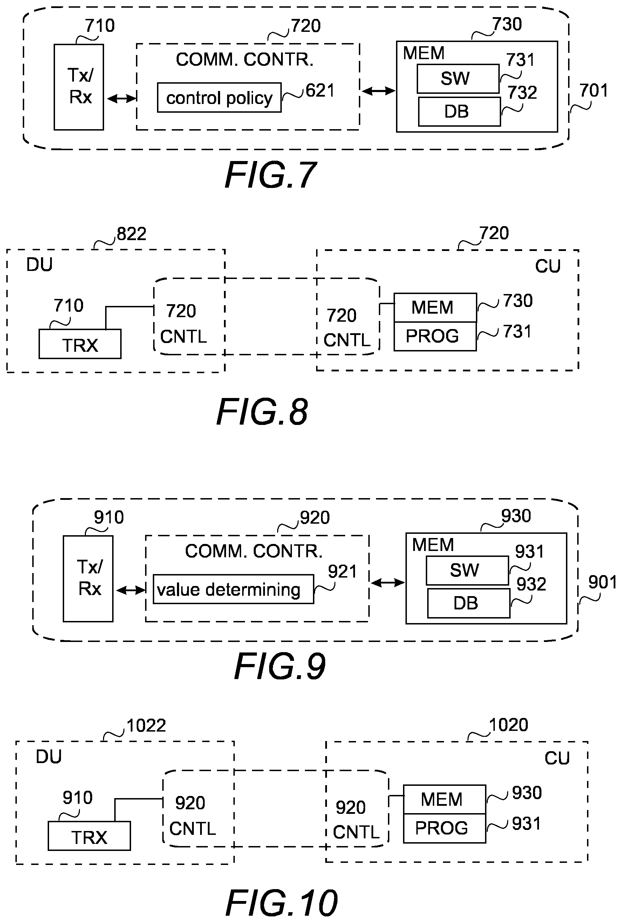

Fig. 7 illustrates an apparatus 701 according to some embodiments. The apparatus 701 may be any apparatus, or electronic device, that may be configured at least to collect historical data in a radio access network. Fig. 8 illustrates an apparatus that may implement distributed functionality of the apparatus illustrated in Fig. 7.

Fig. 9 illustrates an apparatus, e.g. a network apparatus, that may be configured to determine updated weight values based on historical data received and transmit the updated weight values. Fig. 10 illustrates an apparatus that may implement distributed functionality of the apparatus illustrated in Fig. 9. Different examples of such apparatuses are described above.

The apparatus 701, 901 may comprise one or more communication control circuitries 720, 920, such as at least one processor, and at least one memory 730, 930 including one or more algorithms 731, 931, such as a computer program code (software, SW, or instructions) wherein the at least one memory and the computer program code (software) are configured, with the at least one processor, to cause the apparatus to carry out any one of the exemplified functionalities of a corresponding apparatus, described above with any of Fig. 1a to Fig. 5. Said at least one memory 730, 930 may also comprise at least one database (DB) 732, 932.

According to an embodiment, there is provided an apparatus comprising at least means for collecting, per a sampling period, historical data on amount of radiated power for transmission of data elements during the sampling period; and means for transmitting collected historical data to a network entity.

According to an embodiment, there is provided an apparatus comprising at least means for receiving, from at least one second apparatus, historical data collected during at least one sampling period, the historical data including, per a sampling period, amount of radiated power for transmission of data elements during the sampling period; means for determining, using the historical data collected, per a sampling period, a hindsight based estimation for a maximum radiated power consumption that should have been allowed over a next sampling period; means for determining, using at least amounts of radiated power in the historical data received and corresponding hindsight based estimations determined, updated weight values for a control policy; and means for transmitting the updated weight values to the second apparatus.

Referring to Fig. 7, the one or more communication control circuitries 720 of the apparatus 701 comprise at least a control policy circuitry 721, which is configured at least collect historical data and cause transmitting, as discussed with Fig. 2, Fig. 3, and Fig. 5 and/or to apply updatable control policy as discussed with Fig. 3 and Fig. 5. To this end, the control policy circuitry 721 of the apparatus 701 is configured to carry out at least some of the functionalities described above, e.g., by means of Fig. 1a to Fig. 5, for example, using one or more individual circuitries.

Referring to Fig. 7, the memory 730 may be implemented using any suitable data storage technology, such as semiconductor based memory devices, flash memory, magnetic memory devices and systems, optical memory devices and systems, fixed memory and removable memory.

Referring to Fig. 7, the apparatus 701 may further comprise different interfaces 710 such as one or more communication interfaces (TX/RX) comprising hardware and/or software for realizing communication connectivity according to one or more communication protocols. The one or more communication interfaces 710 may enable connecting to the Internet and/or to a core network of a wireless communications network and/or to a radio access network and/or to other apparatuses within range of the apparatus. The one or more communication interface 710 may provide the apparatus with communication capabilities to communicate in a cellular communication system and enable communication to different network nodes or elements or devices, for example. The one or more communication interfaces 710 may comprise standard well-known components such as an amplifier, filter, frequency-converter, (de)modulator, and encoder/decoder circuitries, controlled by the corresponding controlling units, and one or more antennas.

In an embodiment, as shown in Fig. 8, at least some of the functionalities of the apparatus of Fig. 7 may be shared between two physically separate devices, forming one operational entity. Therefore, the apparatus may be seen to depict the operational entity comprising one or more physically separate devices for executing at least some of the described processes. Thus, the apparatus of Fig. 8, utilizing such shared architecture, may comprise a remote control or central unit CU 820, such as a host computer or a server computer, operatively coupled (e.g. via a wireless or wired network) to a remote distributed unit DU 822 located in an access device, for example. In an embodiment, at least some of the described processes may be performed by the CU 820. In an embodiment, the execution of at least some of the described processes may be shared among the DU 822 and the CU 820.

Similar to Fig. 7, the apparatus of Fig. 8 may comprise one or more communication control circuitry (CNTL) 720, such as at least one processor, and at least one memory (MEM) 730, including one or more algorithms (PROG) 731, such as a computer program code (software SW, or instructions) wherein the at least one memory and the computer program code (software, instructions) are configured, with the at least one processor, to cause the apparatus to carry out any one of the exemplified functionalities described above, e.g., by means of Fig. 1a to Fig. 5, for example.

Referring to Fig. 9, the one or more communication control circuitries 920 of the apparatus 901 comprise at least a value determining circuitry 921, which is configured at least to determine updated weight values, as discussed with Fig. 4 and Fig. 5. To this end, the value determining circuitry 921 of the apparatus 901 is configured to carry out at least some of the functionalities described above, e.g., by means of Fig. 1a to Fig. 5, for example, using one or more individual circuitries.

Referring to Fig. 9, the memory 930 may be implemented using any suitable data storage technology, such as semiconductor based memory devices, flash memory, magnetic memory devices and systems, optical memory devices and systems, fixed memory and removable memory.

Referring to Fig. 9, the apparatus 901 may further comprise different interfaces 910 such as one or more communication interfaces (TX/RX) comprising hardware and/or software for realizing communication connectivity according to one or more communication protocols. The one or more communication interfaces 910 may enable connecting to the Internet and/or to a core network of a wireless communications network and/or to a radio access network and/or to other apparatuses within range of the apparatus. The one or more communication interface 910 may provide the apparatus with communication capabilities to communicate in a cellular communication system and enable communication to different network nodes or elements or devices, for example. The one or more communication interfaces 910 may comprise standard well-known components such as an amplifier, filter, frequency-converter, (de)modulator, and encoder/decoder circuitries, controlled by the corresponding controlling units, and one or more antennas.

In an embodiment, as shown in Fig. 10, at least some of the functionalities of the apparatus of Fig. 9 may be shared between two physically separate devices, forming one operational entity. Therefore, the apparatus may be seen to depict the operational entity comprising one or more physically separate devices for executing at least some of the described processes. Thus, the apparatus of Fig. 10, utilizing such shared architecture, may comprise a remote control or central unit CU 1020, such as a host computer or a server computer, operatively coupled (e.g. via a wireless or wired network) to a remote distributed unit DU 1022 located in an edge device or access device, for example. In an embodiment, at least some of the described processes may be performed by the CU 1020. In an embodiment, the execution of at least some of the described processes may be shared among the DU 1022 and the CU 1020.

Similar to Fig. 9, the apparatus of Fig. 10 may comprise one or more communication control circuitry (CNTL) 920, such as at least one processor, and at least one memory (MEM) 930, including one or more algorithms (PROG) 931, such as a computer program code (software SW, or instructions) wherein the at least one memory and the computer program code (software, instructions) are configured, with the at least one processor, to cause the apparatus to carry out any one of the exemplified functionalities described above, e.g., by means of Fig. 1a to Fig. 5, for example.

In embodiments, the CU 820, 1020 may generate a virtual network through which the CU 820, 1020 communicates with the DU 822, 1022. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system.

In an embodiment, the virtual network may provide flexible distribution of operations between the DU and the CU. In practice, any digital signal processing task may be performed in either the DU or the CU and the boundary where the responsibility is shifted between the DU and the CU may be selected according to implementation.

According to an embodiment, there is a system that comprises at least one or more apparatuses configured to collect historical data and/or apply control policy with updatable weight values as discussed with Fig. 2, Fig. 3 and/or Fig. 5, and one or more apparatuses configured to generate (determine) updated weight values for control policy (policies), as discussed with Fig. 4 and/or Fig. 5.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as an access device or node or a network node or network entity, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or other computing or network device.

In an embodiment, at least some of the processes described in connection with Fig. 1a to Fig. 5 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1a to Fig. 5 or operations thereof.

Embodiments and examples as described may also be carried out in the form of a computer process defined by a computer program or portions thereof. Embodiments of the functionalities described in connection with Fig. 1a to Fig. 5 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., random access memory RAM vs. read only memory ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

**Claims**

1. An apparatus comprising:

   means for receiving, from at least one second apparatus, historical data collected during at least one sampling period, the historical data including, per a sampling period, amount of radiated power for transmission of data elements during the sampling period;
   means for determining, using the historical data collected, per a sampling period, a hindsight based estimation for a maximum radiated power consumption that should have been allowed over a next sampling period;
   further comprising means for at least determining the hindsight based estimations by optimizing a fairness between at least a maximum number of served resource requests and a minimum number of served resource request
   means for determining, using at least amounts of radiated power in the historical data received and corresponding hindsight based estimations determined, updated weight values for a control policy; and
   means for transmitting the updated weight values to the second apparatus.

2. The apparatus of claim 1, further comprising means for at least determining the weight values for the control policy by a training a machine learning based model, using at least the amounts of radiated power as inputs and the corresponding hindsight based estimations as target outputs.

3. The apparatus of claim 2, further comprising means for at least determining the updated weight values by minimizing a loss function between the inputs and the target outputs.

4. The apparatus of claim 1, 2 or 3, further comprising, when historical data is first time received from a second apparatus:

   means for determining weight values instead of updated weight values;
   and
   means for transmitting the control policy and weight values to the second apparatus.

5. The apparatus of any preceding claim, wherein the amount of radiated power for transmission of data elements in the historical data is provided by means of at least number of tokens requested during the sampling period, wherein a token is indicative of an amount of radiated power for transmission of a data element.

6. The apparatus of claim 5, wherein the number of tokens requested during the sampling period in the historical data comprises at least a number of tokens requested during the sampling period across all the at least one second apparatus or a number of tokens served during the sampling period across all the at least one second apparatus.

7. The apparatus of claim 6, wherein the historical data further comprises at least one of a number of tokens requested during the sampling period per a second apparatus or a number of tokens served during the sampling period per a second apparatus.

8. An apparatus comprising at least:

> means for collecting, per a sampling period, historical data on amount of radiated power for transmission of data elements during the sampling period; and
> means for transmitting collected historical data to a network entity;
> means for determining a maximum radiated power consumption allowed over a next sampling period based on a control policy having parameters whose values are weight values;
> means for receiving from the network entity updated weight values for the control policy; and
> means for updating the weight values in the control policy to be the updated weight values.

9. The apparatus of claim 8, further comprising means for at least applying a legacy control policy until the control policy is received from the network entity, wherein the control policy is a machine learning based trained control policy.

10. The apparatus of claim 8 or 9, further comprising means for at least transmitting the historical data periodically.

11. The apparatus of claim 8, 9 or 10, wherein the received updated weight values for the control policy are updated weight values transmitted by the apparatus of claims 1 to 7.

12. The apparatus of claims 1 to 7, wherein the apparatus is the network entity of claim 8, 9 or 10, and wherein the second apparatus is the apparatus of claim 8, 9 or 10.

13. A method comprising:

> collecting (201, 302), per a sampling period, historical data on amount of radiated power for transmission of data elements during the sampling period; and
transmitting (202, 303) collected historical data to a network entity;
determining (301) a maximum radiated power consumption allowed over a next sampling period based on a control policy having parameters whose values are weight values;
receiving (304) from the network entity updated weight values for the control policy; and
updating (305) the weight values in the control policy to be the updated weight values.

14. A method comprising:

> receiving (401), from at least one apparatus, historical data collected during at least one sampling period, the historical data including, per a sampling period, amount of radiated power for transmission of data elements during the sampling period;
> determining (402), using the historical data collected, per a sampling period, a hindsight based estimation for a maximum radiated power consumption that should have been allowed over a next sampling period;
> further comprising determining the hindsight based estimations by optimizing a fairness between at least a maximum number of served resource requests and a minimum number of served resource request;
> determining (403), using at least amounts of radiated power in the historical data received and corresponding hindsight based estimations determined, updated weight values for a control policy; and
> transmitting (404) the updated weight values to the apparatus.

15. A computer program or a computer readable medium comprising instructions which, when executed by a computer, cause said computer to perform at least one of a method according to claim 13 or a method according to claim 14.

**Patentansprüche**

1. Vorrichtung, umfassend:

> Mittel zum Empfangen, von mindestens einer zweiten Vorrichtung, von historischen Daten, die während mindestens einer Abtastperiode gesammelt wurden, wobei die historischen Daten pro Abtastperiode eine Menge an abgestrahlter Leistung zur Übertragung von Datenelementen während der Abtastperiode umfassen;
Mittel zum Bestimmen, unter Verwendung der gesammelten historischen Daten, pro Abtastperiode, einer rückblickbasierten Schätzung für einen maximalen abgestrahlten Leistungsverbrauch, der über eine nächste Abtastperiode hätte erlaubt sein sollen;
ferner umfassend Mittel zum zumindest Bestimmen der rückblickbasierten Schätzungen durch Optimieren einer Fairness zwischen mindestens einer maximalen Anzahl von bedienten Ressourcenanfragen und einer minimalen Anzahl von bedienten Ressourcenanfragen;
Mittel zum Bestimmen, unter Verwendung von zumindest Mengen an abgestrahlter Leistung in den empfangenen historischen Daten und entsprechenden bestimmten rückblickbasierten Schätzungen, von aktualisierten Gewichtswerten für eine Steuerungsrichtlinie; und
Mittel zum Übertragen der aktualisierten Gewichtswerte an die zweite Vorrichtung.

2. Vorrichtung nach Anspruch 1, ferner umfassend Mittel zum zumindest Bestimmen der Gewichtswerte für die Steuerungsrichtlinie durch Trainieren eines auf maschinellem Lernen basierenden Modells, unter Verwendung von zumindest den Mengen an abgestrahlter Leistung als Eingaben und den entsprechenden rückblickbasierten Schätzungen als Zielausgaben.

3. Vorrichtung nach Anspruch 2, ferner umfassend Mittel zum zumindest Bestimmen der aktualisierten Gewichtswerte durch Minimieren einer Verlustfunktion zwischen den Eingaben und den Zielausgaben.

4. Vorrichtung nach Anspruch 1, 2 oder 3, ferner umfassend, wenn historische Daten erstmals von einer zweiten Vorrichtung empfangen werden:

Mittel zum Bestimmen von Gewichtswerten anstelle von aktualisierten Gewichtswerten; und
Mittel zum Übertragen der Steuerungsrichtlinie und der Gewichtswerte an die zweite Vorrichtung.

5. Vorrichtung nach einem der vorhergehenden Ansprüche, wobei die Menge an abgestrahlter Leistung zur Übertragung von Datenelementen in den historischen Daten bereitgestellt wird durch Mittel von zumindest einer Anzahl von während der Abtastperiode angeforderten Token, wobei ein Token eine Menge an abgestrahlter Leistung zur Übertragung eines Datenelements angibt.

6. Vorrichtung nach Anspruch 5, wobei die Anzahl der während der Abtastperiode angeforderten Token in den historischen Daten zumindest eine Anzahl von während der Abtastperiode über alle mindestens eine zweite Vorrichtung angeforderten Token oder eine Anzahl von während der Abtastperiode über alle mindestens eine zweite Vorrichtung bedienten Token umfasst.

7. Vorrichtung nach Anspruch 6, wobei die historischen Daten ferner zumindest eines von einer Anzahl von während der Abtastperiode pro zweiter Vorrichtung angeforderten Token oder einer Anzahl von während der Abtastperiode pro zweiter Vorrichtung bedienten Token umfassen.

8. Vorrichtung, umfassend zumindest: Mittel zum Sammeln, pro Abtastperiode, von historischen Daten über eine Menge an abgestrahlter Leistung zur Übertragung von Datenelementen während der Abtastperiode; und

Mittel zum Übertragen von gesammelten historischen Daten an eine Netzwerkeinheit;
Mittel zum Bestimmen eines maximal erlaubten abgestrahlten Leistungsverbrauchs über eine nächste Abtastperiode basierend auf einer Steuerungsrichtlinie mit Parametern, deren Werte Gewichtswerte sind;
Mittel zum Empfangen von aktualisierten Gewichtswerten für die Steuerungsrichtlinie von der Netzwerkeinheit; und Mittel zum Aktualisieren der Gewichtswerte in der Steuerungsrichtlinie auf die aktualisierten Gewichtswerte.

9. Vorrichtung nach Anspruch 8, ferner umfassend Mittel zum zumindest Anwenden einer Legacy-Steuerungsrichtlinie, bis die Steuerungsrichtlinie von der Netzwerkeinheit empfangen wird, wobei die Steuerungsrichtlinie eine auf maschinellem Lernen basierend trainierte Steuerungsrichtlinie ist.

10. Vorrichtung nach Anspruch 8 oder 9, ferner umfassend Mittel zum zumindest periodischen Übertragen der historischen Daten.

11. Vorrichtung nach Anspruch 8, 9 oder 10, wobei die empfangenen aktualisierten Gewichtswerte für die Steuerungsrichtlinie aktualisierte Gewichtswerte sind, die von der Vorrichtung nach den Ansprüchen 1 bis 7 übertragen wurden.

12. Vorrichtung nach den Ansprüchen 1 bis 7, wobei die Vorrichtung die Netzwerkeinheit nach Anspruch 8, 9 oder 10 ist und wobei die zweite Vorrichtung die Vorrichtung nach Anspruch 8, 9 oder 10 ist.

13. Verfahren, umfassend:

Sammeln **(201,302)**, pro Abtastperiode, von historischen Daten über eine Menge an abgestrahlter Leistung zur Übertragung von Datenelementen während der Abtastperiode; und

Übertragen (202,303) von gesammelten historischen Daten an eine Netzwerkeinheit;

Bestimmen (301) eines maximal erlaubten abgestrahlten Leistungsverbrauchs über eine nächste Abtastperiode basierend auf einer Steuerungsrichtlinie mit Parametern, deren Werte Gewichtswerte sind;

Empfangen (304) von aktualisierten Gewichtswerten für die Steuerungsrichtlinie von der Netzwerkeinheit; und

Aktualisieren (305) der Gewichtswerte in der Steuerungsrichtlinie auf die aktualisierten Gewichtswerte.

14. Verfahren, umfassend:

Empfangen (401), von mindestens einer Vorrichtung, von historischen Daten, die während mindestens einer Abtastperiode gesammelt wurden, wobei die historischen Daten pro Abtastperiode eine Menge an abgestrahlter Leistung zur Übertragung von Datenelementen während der Abtastperiode umfassen;

Bestimmen (402), unter Verwendung der gesammelten historischen Daten, pro Abtastperiode, einer rückblickbasierten Schätzung für einen maximalen abgestrahlten Leistungsverbrauch, der über eine nächste Abtastperiode hätte erlaubt sein sollen;

ferner umfassend Bestimmen der rückblickbasierten Schätzungen durch Optimieren einer Fairness zwischen mindestens einer maximalen Anzahl von bedienten Ressourcenanfragen und einer minimalen Anzahl von bedienten Ressourcenanfragen;

Bestimmen (403), unter Verwendung von zumindest Mengen an abgestrahlter Leistung in den empfangenen historischen Daten und entsprechenden bestimmten rückblickbasierten Schätzungen, von aktualisierten Gewichtswerten für eine Steuerungsrichtlinie; und

Übertragen (404) der aktualisierten Gewichtswerte an die Vorrichtung.

15. Computerprogramm oder computerlesbares Medium, umfassend Anweisungen, die, wenn sie von einem Computer ausgeführt werden, den Computer veranlassen, zumindest eines von einem Verfahren nach Anspruch 13 oder einem Verfahren nach Anspruch 14 durchzuführen.

**Revendications**

1. Appareil comprenant:

des moyens pour recevoir, d'au moins un deuxième appareil, des données historiques collectées pendant au moins une période d'échantillonnage, les données historiques incluant, par période d'échantillonnage, une quantité de puissance rayonnée pour la transmission d'éléments de données pendant la période d'échantillonnage ;

des moyens pour déterminer, en utilisant les données historiques collectées, par période d'échantillonnage,

une estimation rétrospective d'une consommation de puissance rayonnée maximale qui aurait dû être autorisée sur une période d'échantillonnage suivante ;

comprenant en outre des moyens pour au moins déterminer les estimations rétrospectives en optimisant une équité entre au moins un nombre maximal de demandes de ressources servies et un nombre minimal de demandes de ressources servies ;

des moyens pour déterminer, en utilisant au moins des quantités de puissance rayonnée dans les données historiques reçues et des estimations rétrospectives correspondantes déterminées, des valeurs de poids mises à jour pour une politique de contrôle ; et

des moyens pour transmettre les valeurs de poids mises à jour au deuxième appareil.

2. Appareil selon la revendication 1, comprenant en outre des moyens pour au moins déterminer les valeurs de poids pour la politique de contrôle par un entraînement d'un modèle basé sur l'apprentissage automatique, en utilisant au moins les quantités de puissance rayonnée comme entrées et les estimations rétrospectives correspondantes comme sorties cibles.

3. Appareil selon la revendication 2, comprenant en outre des moyens pour au moins déterminer les valeurs de poids mises à jour en minimisant une fonction de perte entre les entrées et les sorties cibles.

4. Appareil selon la revendication 1, 2 ou 3, comprenant en outre, lorsque des données historiques sont reçues pour la première fois d'un deuxième appareil :

des moyens pour déterminer des valeurs de poids au lieu de valeurs de poids mises à jour ; et

des moyens pour transmettre la politique de contrôle et les valeurs de poids au deuxième appareil.

5. Appareil selon l'une quelconque des revendications précédentes, dans lequel la quantité de puissance rayonnée pour la transmission d'éléments de données dans les données historiques est fournie par des moyens d'au moins un nombre de jetons demandés pendant la période d'échantillonnage, un jeton étant indicatif d'une quantité de puissance rayonnée pour la transmission d'un élément de données.

6. Appareil selon la revendication 5, dans lequel le nombre de jetons demandés pendant la période d'échantillonnage dans les données historiques comprend au moins un nombre de jetons demandés pendant la période d'échantillonnage à travers tous les au moins un deuxième appareil ou un nombre de jetons servis pendant la période d'échantillonnage à travers tous les au moins un deuxième appareil.

7. Appareil selon la revendication 6, dans lequel les données historiques comprennent en outre au moins l'un d'un nombre de jetons demandés pendant la période d'échantillonnage par deuxième appareil ou d'un nombre de jetons servis pendant la période d'échantillonnage par deuxième appareil.

8. Appareil comprenant au moins : des moyens pour collecter, par période d'échantillonnage, des données historiques sur une quantité de puissance rayonnée pour la transmission d'éléments de données pendant la période d'échantillonnage ; et

   des moyens pour transmettre les données historiques collectées à une entité de réseau ;
   des moyens pour déterminer une consommation de puissance rayonnée maximale autorisée sur une période d'échantillonnage suivante sur la base d'une politique de contrôle ayant des paramètres dont les valeurs sont des valeurs de poids ;
   des moyens pour recevoir de l'entité de réseau des valeurs de poids mises à jour pour la politique de contrôle ; et des moyens pour mettre à jour les valeurs de poids dans la politique de contrôle pour qu'elles soient les valeurs de poids mises à jour.

9. Appareil selon la revendication 8, comprenant en outre des moyens pour au moins appliquer une politique de contrôle héritée jusqu'à ce que la politique de contrôle soit reçue de l'entité de réseau, la politique de contrôle étant une politique de contrôle entraînée basée sur l'apprentissage automatique.

10. Appareil selon la revendication 8 ou 9, comprenant en outre des moyens pour au moins transmettre les données historiques périodiquement.

11. Appareil selon la revendication 8, 9 ou 10, dans lequel les valeurs de poids mises à jour reçues pour la politique de contrôle sont des valeurs de poids mises à jour transmises par l'appareil des revendications 1 à 7.

12. Appareil selon les revendications 1 à 7, dans lequel l'appareil est l'entité de réseau de la revendication 8, 9 ou 10, et dans lequel le deuxième appareil est l'appareil de la revendication 8, 9 ou 10.

13. Procédé comprenant :

   la collecte (201,302), par période d'échantillonnage, de données historiques sur une quantité de puissance rayonnée pour la transmission d'éléments de données pendant la période d'échantillonnage ; et
   la transmission (202,303) des données historiques collectées à une entité de réseau ;
   la détermination (301) d'une consommation de puissance rayonnée maximale autorisée sur une période d'échantillonnage suivante sur la base d'une politique de contrôle ayant des paramètres dont les valeurs sont des valeurs de poids ;
   la réception (304) de l'entité de réseau de valeurs de poids mises à jour pour la politique de contrôle ; et
   la mise à jour (305) des valeurs de poids dans la politique de contrôle pour qu'elles soient les valeurs de poids mises à jour.

14. Procédé comprenant :

   la réception (401), d'au moins un appareil, de données historiques collectées pendant au moins une période d'échantillonnage, les données historiques incluant, par période d'échantillonnage, une quantité de puissance rayonnée pour la transmission d'éléments de données pendant la période d'échantillonnage ;
   la détermination (402), en utilisant les données historiques collectées, par période d'échantillonnage, d'une estimation rétrospective d'une consommation de puissance rayonnée maximale qui aurait dû être autorisée sur une période d'échantillonnage suivante ;
   comprenant en outre la détermination des estimations rétrospectives en optimisant une équité entre au moins un nombre maximal de demandes de ressources servies et un nombre minimal de demandes de ressources servies ;
   la détermination (403), en utilisant au moins des quantités de puissance rayonnée dans les données historiques reçues et des estimations rétrospectives correspondantes déterminées, de valeurs de poids mises à jour pour une politique de contrôle ; et
   transmettre (404) les valeurs de poids mises à jour à l'appareil.

15. Programme informatique ou support lisible par ordinateur comprenant des instructions qui, lorsqu'elles sont exécutées par un ordinateur, amènent ledit ordinateur à exécuter au moins l'un d'un procédé selon la revendication 13 ou d'un procédé selon la revendication 14.

*FIG.1a*

*FIG.1b*

*FIG.1c*

| collect historical data | ~ 201 |

| transmit historical data to network | ~ 202 |

*FIG.2*

| control policy with weight values as parameters | ~ 300 |

| determine, based on control policy,<br>max radiated power consumption allowed | ~ 301 |

| collect historical data | ~ 302 |

| transmit historical data to network | ~ 303 |

| receive updated weight values | ~ 304 |

| update weight values in control policy | ~ 305 |

*FIG.3*

| receive historical data | ~ 401 |

| determine hindsight based estimations | ~ 402 |

| determine updated weight values | ~ 403 |

| transmit updated weight values | ~ 404 |

*FIG.4*

| RAN apparatus | | NW apparatus |
|---|---|---|

determine max r.p. based on legacy policy ~ 5-1

collect historical data ~ 5-2

5-3 →

determine estimations ~ 5-4

determine weight values for ML based policy ~ 5-5

5-6

store ML based policy ~ 5-7

determine max r.p. based on ML based policy ~ 5-8

collect historical data ~ 5-2

5-3 →

determine estimations ~ 5-4

determine updated weight values ~ 5-9

5-10

update weight values ~ 5-11

determine max r.p. based on ML based policy ~ 5-8a

collect historical data ~ 5-2

5-3 →

determine estimations ~ 5-4

determine updated weight values ~ 5-9

5-10

## FIG.5

FIG.6

*FIG.7*

*FIG.8*

*FIG.9*

*FIG.10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022241605 A1